# EUROPEAN PATENT APPLICATION

(11) **EP 3 327 640 A1**
(43) Date of publication of application: **30.05.2018**
(21) Application number: 16827851.3
(22) Date of filing: 22.07.2016
(51) Int. Cl.: G06Q 10/02

(54) **RESERVATION MANAGEMENT DEVICE, RESERVATION MANAGEMENT METHOD, AND RESERVATION MANAGEMENT PROGRAM**

(30) Priority: 23.07.2015 JP 2015145685; 25.04.2016 JP 2016087472
(71) Applicant: Recruit Holdings Co., Ltd., Tokyo 104-0061 (JP)
(72) Inventor: YUMIBA, Hirotsugu, Tokyo 100-6640 (JP)
(74) Representative: EIP
(86) International application number: PCT/JP2016/071482
(87) International publication number: WO 2017/014291

(57) **Abstract**

Overlapping reservations of a resource are prevented easily and reliably. A reservation management module of a reservation management server connectable with a reservation acceptor terminal and a reservation applicant terminal over a network allows the reservation acceptor to register a menu item that specifies a content of a service provided by the reservation acceptor, a resource used when providing the service, and a resource group to which the resource is able to belong, allows the reservation acceptor to set, for each resource, one or more resource groups to which the resource belongs, and accepts a reservation from the reservation applicant with use of the menu item, the resource, and the resource group in such a manner as to prevent the resource, belonging to a plurality of resource groups, from being reserved in an overlapping manner in the same time slot when accepting the reservation, with use of a correspondence relationship between the resource and the resource group set by the reservation acceptor.

## Description

### Cross Reference to Related Applications

The present application is based upon and claims the benefit of priority from Japanese patent applications No. 2015-145685, filed on July 23, 2015, and No. 2016-087472, filed on April 25, 2016, the disclosures of which are incorporated herein in their entireties by reference.

### Technical Field

The present invention relates to a reservation management apparatus, a reservation management method, and a reservation management program.

### Background Art

In a reservation system for a school, a hospital, or the like, a reservation is accepted with respect to an instructor or a doctor in charge. Accordingly, it is necessary to accept a reservation in consideration of a reservation status of an instructor, a doctor, or the like, conventionally. This means that in the case of accepting a reservation for a service to be provided, a reservation status of a resource (human, facility, equipment, or the like, for example) used for providing the service must be considered. Patent Literature 1 discloses a system for reserving a class or the like of a driving school. In the system, the number of subjects assigned to instructors that are resources is adjusted to reduce unevenness in the loads among the instructors.

### Citation List

### Patent Literature

Patent Literature 1: Japanese Patent Laid-Open No. 2002-56106

### Summary of Invention

### Technical Problem

In the reservation system described in Patent Literature 1, when a trainee reserves a class, the system selects instructors who are able to work, and from among the selected instructors, further selects an instructor who satisfies various conditions set to reduce unevenness in the loads for instruction, and assigns the instructor to take charge. By adopting such a complicated logic, the loads for instruction placed on the instructors that are resources are made uniform, and classes are fairly allocated to the respective instructors. However, as a complicated logic is incorporated, the system becomes too complicated. Therefore, it is unsuitable for a general reservation system. On the other hand, when the conditions for reservation are mitigated, an inconvenience that a resource is reserved in an overlapping manner may be caused.

The present invention has been made to solve the aforementioned problem. An object of the present invention is to provide a reservation management apparatus, a reservation management method, and a reservation management program that enable overlapping reservations of a resource to be prevented easily and reliably.

A reservation management apparatus, according to an aspect of the present invention, is a reservation management apparatus connectable with a reservation acceptor terminal used by a reservation acceptor who accepts a reservation, and a reservation applicant terminal used by a reservation applicant who applies for a reservation, over a network. The apparatus includes a means for allowing the reservation acceptor to register a menu item that specifies a content of a service provided by the reservation acceptor, a resource used when providing the service, and a resource group to which the resource is able to belong; a means for allowing the reservation acceptor to set, for each of the resource, one or more of the resource groups to which the resource belongs; and a means for accepting a reservation from the reservation applicant with use of the menu item, the resource, and the resource group. The means for accepting the reservation accepts a reservation in such a manner as to prevent the resource belonging to the resource groups from being reserved in an overlapping manner in the same time slot, with use of a correspondence relationship between the resource and the resource group set via the reservation acceptor terminal by the reservation acceptor.

The means for allowing the reservation acceptor to select may further allow the reservation acceptor to select an industry or a type of business of the reservation acceptor, and the means for allowing the reservation acceptor to register may present, to the reservation acceptor, contents respectively registerable as the menu item, the resource and the resource group. The contents are previously set in association with the industry or the type of business selected by the reservation acceptor via the reservation acceptor terminal.

The means for allowing the reservation acceptor to register may further allow registration of price of each of the resource.

The means for allowing the reservation acceptor to register may further allow registration of the resource group selectable by the reservation applicant at least in the menu item, when allowing registration of the menu item.

A means for allowing the reservation acceptor to select, from reservation acceptance types including at least a preset type and/or a free acceptance type, one of the reservation acceptance types, is further included. The preset type is a type of accepting a reservation from the reservation applicant with use of a reservation slot previously set by the reservation acceptor, and the free acceptance type is a type of accepting a reservation from the reservation applicant by allowing setting of a reservation slot within service providing hours previously set by the reservation acceptor. The means for accepting the reservation may accept a reservation from the reservation applicant with further use of a reservation acceptance screen corresponding to the reservation acceptance type selected by the reservation acceptor via the reservation acceptor terminal.

The means for accepting the reservation may specify the resource group to which the resource selected in a reservation by the reservation applicant belongs and that is other than the resource group selected in the reservation, with use of the correspondence relationship between the resource and the resource group set by the reservation acceptor via the reservation acceptor terminal, and determine whether or not the resource is registered as the resource belonging to the specified resource group in a time slot including a reservation time set in the reservation. The means may not accept the registration when the resource is registered, while may accept the registration when the resource is not registered.

The reservation acceptance types may further include an offer-based acceptance type that is a type of accepting a reservation from the reservation applicant with use of an offer-based reservation slot set by the reservation applicant authorized by the reservation acceptor. The reservation slot for the offer-based acceptance type may be set by accepting, from the reservation applicant, designation of a range of setting the offer-based reservation slot within a range in which a reservation slot is settable and no reservation slot is set, and accepting, from the reservation applicant, at least the menu item corresponding to the offer-based reservation slot and the number of persons allowed to reserve in the offer-based reservation slot.

Regarding the reservation slot of the offer-based acceptance type, a reservation may be established when an execution condition of a predetermined reservation object is satisfied.

A reservation management method, according to an aspect of the present invention, is a method executed by a computer device connectable with a reservation acceptor terminal used by a reservation acceptor who accepts a reservation, and a reservation applicant terminal used by a reservation applicant who applies for a reservation, over a network. The method includes a step of allowing the reservation acceptor to register a menu item that specifies a content of a service provided by the reservation acceptor, a resource used when providing the service, and a resource group to which the resource is able to belong; a step of allowing the reservation acceptor to set, for each of the resource, one or more of the resource groups to which the resource belongs; and a step of accepting a reservation from the reservation applicant with use of the menu item, the resource, and the resource group. The step of accepting the reservation includes accepting a reservation in such a manner as to prevent the resource belonging to the resource groups from being reserved in an overlapping manner in the same time slot, with use of a correspondence relationship between the resource and the resource group set via the reservation acceptor terminal by the reservation acceptor.

A reservation management program, according to an aspect of the present invention, causes a computer device, the computer device being connectable over a network with a reservation acceptor terminal used by a reservation acceptor who accepts a reservation and a reservation applicant terminal used by a reservation applicant who applies for a reservation, to function as a means for allowing the reservation acceptor to register a menu item that specifies a content of a service provided by the reservation acceptor, a resource used when providing the service, and a resource group to which the resource is able to belong; a means for allowing the reservation acceptor to set, for each of the resource, one or more of the resource groups to which the resource belongs; and a means for accepting a reservation from the reservation applicant with use of the menu item, the resource, and the resource group. The means for accepting the reservation accepts a reservation in such a manner as to prevent the resource belonging to the resource groups from being reserved in an overlapping manner in the same time slot, with use of a correspondence relationship between the resource and the resource group set via the reservation acceptor terminal by the reservation acceptor.

### Advantageous Effect of Invention

According to the present invention, it is possible to prevent overlapping reservations of a resource easily and reliably.

### Brief Description of Drawings

[Figure 1] Figure 1 is a diagram illustrating a configuration of a reservation management system including a reservation management server of an embodiment.
[Figure 2] Figure 2 is a diagram illustrating a configuration of the reservation management server illustrated in Figure 1.
[Figure 3] Figure 3 is a diagram illustrating a correspondence relationship between resources and resource groups in the embodiment.
[Figure 4] Figure 4 is a diagram illustrating a correspondence relationship between resources and resource groups in a comparative example.
[Figure 5] Figure 5 illustrates a schedule table displayed on a screen of a reservation acceptor terminal.
[Figure 6] Figure 6 illustrates a schedule table displayed on a screen of a reservation applicant terminal.
[Figure 7] Figure 7 illustrates a schedule table displayed on a screen of a reservation acceptor terminal.
[Figure 8] Figure 8 illustrates a schedule table displayed on a screen of a reservation applicant terminal.

### Description of Embodiments

Hereinafter, an embodiment of the present invention will be described with reference to the drawings. It should be noted that the same element is denoted by the same reference sign, and the overlapping description is not repeated.

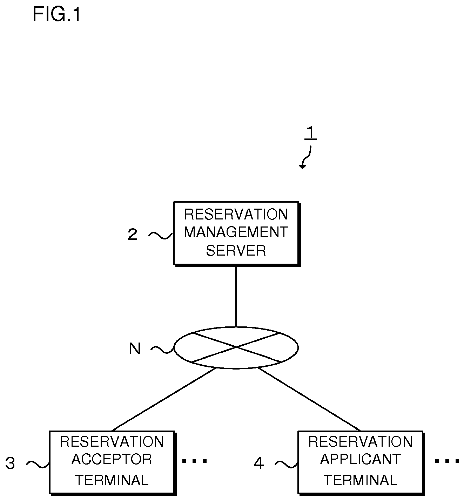

Figure 1 is a schematic configuration diagram of a reservation management system including a reservation management server as a reservation management apparatus of an embodiment of the present invention. As illustrated in Figure 1, a reservation management system 1 of the present embodiment includes a reservation management server 2, at least one reservation acceptor terminal 3, and at least one reservation applicant terminal 4. Each of the reservation acceptor terminal 3 and the reservation applicant terminal 4 is configured to communicate with the reservation management server 2 over a network N.

The reservation acceptor terminal 3 is a terminal device used by a service provider as a reservation acceptor for accepting a reservation of a service. The service provider may be a provider of any industry or type of business.

The reservation applicant terminal 4 is a terminal device used by a user who receives a service as a reservation applicant for applying for a reservation of a service.

In the present embodiment, description is given on the assumption that a personal computer (PC) is used as each of the reservation acceptor terminal 3 and the reservation applicant terminal 4. However, the present embodiment is not limited to this. A laptop computer, a tablet terminal, a smartphone, a mobile phone, a personal digital assistant (PDA), or any other terminal device can be used appropriately as each of the reservation acceptor terminal 3 and the reservation applicant terminal 4.

The reservation management server 2 is configured of a computer having high arithmetic processing capability, and realizes a server function by the operation of a server program in the computer, for example. Here, it is not necessary that the reservation management server 2 is configured of one computer. It may be configured of a plurality of computers distributed on the network N.

The network N includes a communication network capable of transmitting and receiving information among the reservation management server 2, the reservation acceptor terminal 3, and the reservation applicant terminal 4. The network N may be the Internet, LAN, an exclusive line, a telephone line, an intracompany network, Mobile communication network Bluetooth (registered trademark), WiFi (Wireless Fidelity), another communication line, a combination thereof, or the like, regardless of wired or wireless one.

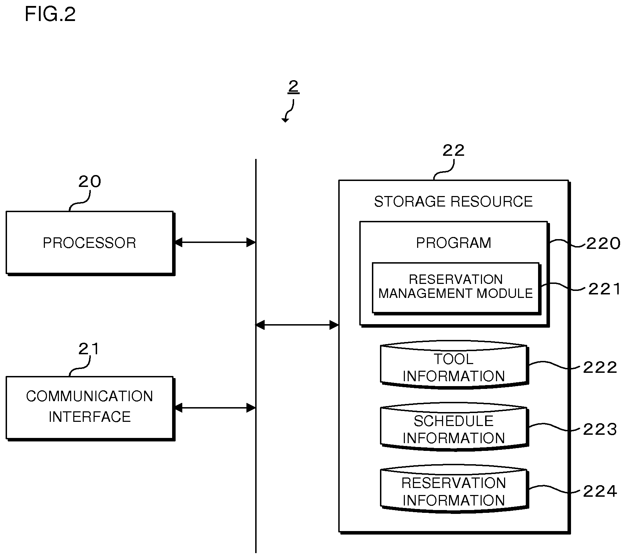

As illustrated in Figure 2, the reservation management server 2 includes a processor 20, a communication interface 21, and a storage resource 22, for example.

The processor 20 is configured of an arithmetic and logical operation unit configured to process arithmetic operation, logical operation, bit operation, and the like, and various registers. The processor 20 realizes various functions, described below, by executing a computer program 220 stored in the storage resource 22. The various registers include a program counter, a data register, a command register, a general purpose register, and the like, for example.

The communication interface 21 is a hardware module configured to connect to the network N and communicate with another terminal on the network N. The communication interface 21 is a modulator-demodulator such as an ISDN modem, an ADSL modem, a cable modem, an optical modem, or a software modem, for example.

The storage resource 22 is a logical device provided by the storage region of a physical device, for example. The physical device is a computer-readable recording medium such as a disk drive or a semiconductor memory, for example. The storage resource 22 may be constructed by mapping a plurality of physical devices in one logical device or constructed by mapping one physical device in a plurality of logical devices. In the storage resource 22, the computer program 220 is stored.

In the storage resource 22, an operating system program used for processing of the reservation management server 2, a driver program, various types of data, and the like are stored, in addition to the computer program 220. As the driver program, a communication interface driver program for controlling the communication interface 21 or the like is used, for example. The various types of data include tool information 222 for supporting creation of a schedule table for accepting reservations (reservation acceptance screen), schedule information 223 for accepting reservations registered by the reservation acceptor, reservation information 224 input by the reservation applicant, and the like, for example.

The computer program 220 is a program for performing predetermined processing, and includes a plurality of software modules that are called and executed from time to time during operation of the main program of the reservation management server 2. The software modules are subprograms modularized for executing particular processing respectively, and are created with use of procedures, subroutines, methods, functions, data structures, and the like.

The computer program 220 includes a reservation management module 221, for example. Hereinafter, a function realized by executing the reservation management module 221 will be described.

The reservation management module 221 accepts an account registration of a reservation acceptor. When the reservation acceptor begins to use the reservation management system 1, the reservation acceptor operates the reservation acceptor terminal 3 to access a predetermined web page of the reservation management server 2, and register an account of the reservation acceptor. In the account registration, information related to the reservation acceptor such as a user ID, a password, an email address, name, and industry or type of business are registered.

The reservation management module 221 allows the reservation acceptor, who registered the account, to select a reservation acceptance type for specifying a reservation accepting method. In the present embodiment, the case where a preset type and a free acceptance type are provided as reservation acceptance types will be described as an example.

The preset type is a method of accepting a reservation from a reservation applicant with use of a reservation slot previously set by the reservation acceptor. The specific description will be provided below.

In the case where the industry or the type of business of a reservation acceptor is a fitness studio, for example, the reservation acceptor creates a schedule table in which "hot yoga" programs are set from 11:00 to 12:00 on Tuesday to Sunday, and "Pilates" programs are set from 14:00 to 15:00 on Tuesday, Thursday, and Saturday, as reservation slots, and discloses the schedule table on the network. A reservation applicant selects a reservation slot having any vacancy in the capacity, among the reservation slots shown on the schedule table disclosed on the network, and reserves the service.

The free acceptance type is a method of accepting a reservation from a reservation applicant by allowing the reservation applicant to set a desired reservation slot within the service providing hours set by the reservation acceptor. The specific description will be provided below.

In the case where the industry or the type of business of a reservation acceptor is a dental clinic, for example, the reservation acceptor creates a schedule table by setting 10:00 to 17:00, that is consultation hours of the dental clinic, as service providing hours, and registering the consultation content, a dentist in charge, consultation hours, and the like constituting a reservation slot to be set by a reservation applicant, and discloses the schedule table on the network. A reservation applicant reserves a service by setting a desired reservation slot (consultation content, dentist in charge, consultation hours, and the like) within a period with no reservation from 10:00 to 17:00 that is consultation hours set in the schedule table disclosed on the network.

The reservation management module 221 allows the reservation acceptor to register menu items specifying the service contents provided by the reservation acceptor, resources for providing the service (persons, facility, equipment, etc.), and resource groups that the resources are attributable, respectively. One or more menu items, resources, and resource groups may be registered, respectively. Specific examples of the menu items, resources, and resource groups will be described below.

In the case where the industry or the type of business of the reservation acceptor is a fitness studio, menu items correspond to "hot yoga" and "Pilates", for example, and resource groups correspond to "instructors" and "options", for example. Resources of the "instructors" correspond to the names of the respective instructors, and resources of the "options" correspond to "yoga mats" and "towels", for example.

In the case where the industry or the type of business of the reservation acceptor is a cram school, menu items correspond to "summer course" and "competitive school exam course", for example, resource groups correspond to "Japanese language", "English", and "mathematics", for example, and resources correspond to the names of the instructors, for example.

In the case where the industry or the type of business of the reservation acceptor is a dental clinic, menu items corresponds to "first examination", "re-examination", and "whitening", a resource group corresponds to "dentists in charge", for example, and resources correspond to the names of respective dentists, for example.

In the case where the industry or the type of business of the reservation acceptor is a rental meeting room, menu items correspond to "rental meeting room" and "rental hall", for example, resource groups correspond to building names and facility names, for example, and resources correspond to room numbers, for example.

Here, when the reservation management module 221 allows the reservation acceptor to register menu items, resource groups, and resources, the reservation management module 221 may present, to the reservation acceptor, the respective contents of the menu items, the resource groups, and the resources corresponding to the industry and the type of business selected by the reservation acceptor at the time of registration of accounts as registration candidates. The registration candidates to be presented may be stored in advance in the storage resource 22 of the reservation management server 2, in association with the industry and the type of business.

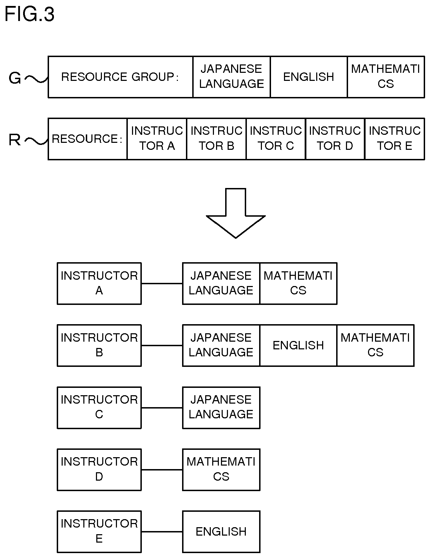

Further, at the time of registration or after the registration of the resource group and the resource, the reservation management module 221 allows the reservation acceptor to set, for each resource, one or more resource groups to which the resource belongs. This will be described specifically with reference to Figure 3.

Figure 3 illustrates the case where a reservation acceptor who runs a cram school registers "Japanese language", "English", and "mathematics" as resource groups G, and registers "Instructor A", "Instructor B", "Instructor C", "Instructor D", and "Instructor E" as resources R. Figure 3 also illustrates that "Japanese language" and "mathematics" are set as resource groups G to which "Instructor A", among the resources R, belongs, "Japanese language", "English", and "mathematics" are set as resource groups G to which "Instructor B" belongs, "Japanese language" is set as a resource group G to which "Instructor C" belongs, "mathematics" is set as a resource group G to which "Instructor D" belongs, and "English" is set as a resource group G to which "Instructor E" belongs.

In this way, by storing a resource and one or more resource groups to which the resource belongs in the storage resource 22 in association with each other, it is possible to easily specify the resource groups to which the resource belongs, on the basis of the resource. Accordingly, when a resource belonging to a plurality of resource groups is the object of reservation, it is possible to easily check the reservation statuses in all of the resource groups linked to the resource.

Specifically, it is only necessary that when a resource that is a reservation object is already registered in another resource group in the time slot including the reservation time, the reservation is not allowed, while when it is not registered in another resource group, the reservation is allowed. With such management, it is possible to easily and reliably prevent a resource belonging to a plurality of resource groups from being reserved in an overlapping manner in different resource groups in the same time slot.

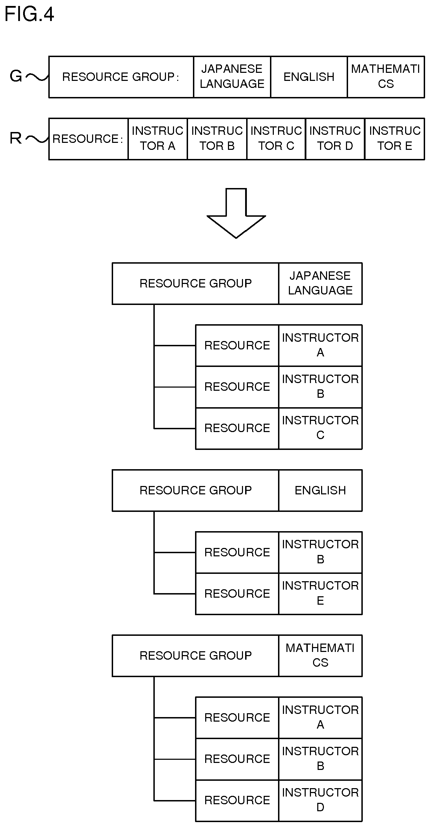

Here, although it is also considered to manage resources by the resource group, for example, the system for preventing overlapping reservations becomes complicated in such a way of management. Figure 4 illustrates the case of managing the resources by the resource group by setting resources belonging to each resource group, as a comparative example of the present embodiment. The resource group G and the resource R illustrated in Figure 4 have the same data configurations as those of Figure 3. Figure 4 further illustrates that "Instructor A", "Instructor B", and, "Instructor C" are set as the resources R belonging to "Japanese language" of the resource groups G, "Instructor B" and "Instructor E" are set as the resources R belonging to "English", and "Instructor A", "Instructor B", and "Instructor D" are set as the resources R belonging to "mathematics".

As described above, in the case of managing the resources by setting resources by the resource group, reservation is managed on a resource group basis. For example, in the case of making a reservation for "Japanese language", a reservation is made by selecting an instructor from "Instructor A", "Instructor B", and "Instructor C", and in the case of making a reservation for "mathematics", a reservation is made by selecting an instructor from "Instructor A", "Instructor B", and "Instructor D".

In that case, as "Instructor A" and "Instructor B" belong to both "Japanese language" and "mathematics", there is a possibility that reservations are made in an overlapping manner in "Japanese language" and "mathematics". In order to prevent such overlapping reservations, it is necessary to additionally provide a logic for checking whether or not the selected resource belongs to another resource group, and if it belongs, determining the availability after checking the reservation status of the other resource group. Therefore, the system becomes complicated.

Meanwhile, by managing the resource groups by the resource as in the present embodiment, when "Instructor A" is selected for reserving "Japanese language", the reservation status in "mathematics" linked to "Instructor A" can be checked easily. Therefore, it is possible to easily prevent overlapping reservations. This means that it is not necessary to additionally provide a complicated logic in the present embodiment.

Further, when the reservation management module 221 illustrated in Figure 2 allows the reservation acceptor to register a resource, it is able to allow the reservation acceptor to register the number of reservations acceptable simultaneously, available date and time, acceptance status, price, and the like as information related to the resource, in addition to the name of the resource. Each item will be described below.

The number of reservations acceptable simultaneously is an item effective with respect to a resource in which reservations of a plurality of persons are acceptable simultaneously. For example, in a hot yoga program, a plurality of persons can participate in one lesson. As such, for each instructor that is a resource, the upper limit number of participants in the same slot is registered. The number of reservations acceptable simultaneously is used in the case of presenting the remaining number of acceptable reservations to reservation applicants, for example.

Available date and time is an item effective with respect to a resource in which availability of reservation differs depending on the day or time. For example, regarding hot yoga programs, respective instructors differ in work days and work hours. As such, for each instructor that is a resource, available day and a time slot are registered. Available date and time is used in the case of presenting only instructors who are able to work in the target reservation slot, to reservation applicants.

Availability status is an item effective for a resource in which whether or not reservation is acceptable varies depending on the period, stock status, or the like. Availability statuses include "available", "suspended", and the like, for example.

Price is an item effective for a resource in which additional price is caused in addition to the price set for each menu item described below. Further, regarding a resource, the contents and the number of the resource groups to which it belongs differ from each other. Accordingly, by allowing setting of the price of each resource according to the contents and the number of resource groups, it is possible to set appropriate price according to the capability, quality, and the like of the resource.

Further, when the reservation management module 221 is allowed to register menu items, in addition to the names of the menu items, description of each menu item, price of the menu item, resource groups associated with the menu item, and the like may be registered together or separately as information related to the menu item. Each item will be described below.

Description of a menu item is an item storing sentences and the like describing the content of the menu item. This is an item used by a reservation applicant when he/she selects a menu item. It should be noted that when the reservation acceptor is allowed to register the description of menu items, description of menu items corresponding to the industry and the type of business selected by the reservation acceptor when registering the account may be presented to the reservation acceptor as registration candidates.

Price of a menu item is an item storing the cost of the service corresponding to the menu item. In the case where additional cost is charged depending on each resource, such a cost is registered in the price that can be set for each resource as described above.

A resource group associated with a menu item is an item used for presenting a resource group and resources belonging to the resource group selectable in the selected menu item when a reservation applicant makes a reservation. By associating a particular resource group with a menu item, it is possible to easily manage the reservation status of the resources belonging to the resource group for each menu item.

The reservation management module 221 displays, on the reservation acceptor terminal 3 and the reservation applicant terminal 4, a schedule table (reservation management screen) corresponding to the reservation acceptance type selected by the reservation acceptor. The contents of the schedule table are set with use of the menu items, the resource groups, the resources, and information related to them, registered by the reservation acceptor. For example, the contents of the schedule table may be set as described below, for example.

In the case where the reservation acceptance type is a preset type, the reservation acceptor sets a reservation slot in the schedule table by setting a menu item and a time slot for providing a service corresponding to the menu item. When a resource group to be associated with the menu item is registered as information related to the set menu item, the resource belonging to the resource group is shown in the set reservation slot. When available date and time are registered as information related to the resources, only a resource available in the set time slot is displayed. Further, when the number of reservations acceptable simultaneously is registered as information related to the resource, the reservation status is displayed in the set reservation slot.

In the case where the reservation acceptance type is a free acceptance type, the reservation acceptor sets service providing hours in the schedule table. A reservation applicant sets a desired reservation slot within the service providing hours set by the reservation acceptor.

The reservation acceptor discloses URL (uniform resource locator) of an accessible reservation acceptance page in the schedule table to thereby accept a reservation from a reservation applicant. Information related to a reservation input by a reservation applicant who operated the reservation applicant terminal 4 is stored in the storage resource 22 of the reservation management server 2 as reservation information 224, and is reflected in the schedule table. A reservation applicant may make a reservation by inputting reservation information as described below, for example.

When the reservation acceptance type is a preset type, a reservation applicant makes a reservation by selecting a reservation slot having a vacancy in the capacity among the reservation slots shown in the schedule table and inputting information required for a reservation. The information required for a reservation includes name, user ID, and the like of the person who makes a reservation, for example.

When the reservation acceptance type is a free acceptance type, a reservation applicant makes a reservation by selecting a menu item and a resource to be reserved, displaying a schedule table corresponding to the menu item and the resource, selecting a time slot having a vacancy for reservation in the service providing hours, to thereby set a reservation slot and input information necessary for the reservation.

It should be noted that the displayed contents of the schedule table displayed on the reservation acceptor terminal 3 and the displayed contents of the schedule table displayed on the reservation applicant terminal 4 are not necessarily coincide with each other. It is possible to display contents appropriate for the respective roles. Specific description for each reservation acceptance type will be described below.

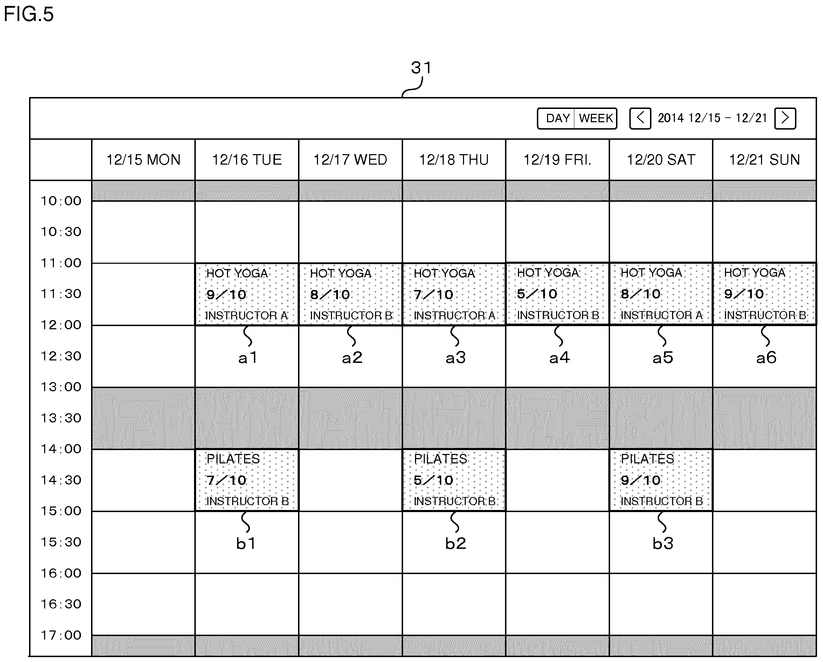

Figure 5 illustrates a schedule table as a reservation acceptance screen displayed on the reservation acceptor terminal 3 when the reservation acceptance type is a preset type. Figure 5 is an example of a schedule table 31 displayed in the case where the industry or the type of business of a reservation acceptor is a fitness studio. In the schedule table 31, a plurality of reservation slots a1 to a6 and b1 to b3, set by the reservation acceptor, are displayed.

In each of the reservation slots a1 to a6 and b1 to b3, the upper row shows a menu item, the intermediate row shows the number of persons who made reservations relative to the capacity at the present point, and the lower row shows the name of an instructor that is a resource.

For example, the reservation slot a1 shows that a "hot yoga" program is scheduled from 11:00 to 12:00 on Tuesday, December 16, the instructor is "Instructor A", and the reservation status is that nine persons made reservations relative to the capacity of ten.

Meanwhile, the reservation slot b1 shows that a "Pilates" program is scheduled from 14:00 to 15:00 on Tuesday, December 16, the instructor is "Instructor B", and the reservation status is that seven persons made reservations relative to the capacity of ten.

It should be noted that in the schedule table 31, time slots other than 10:00 to 17:00 that is operating hours of the fitness studio and a time slot from 13:00 to 14:00 that is lunch time have darker background color than the other time slots, indicating that those time slots are excluded for reservation. While the schedule table 31 is displayed on a weekly basis, it may be displayed on a daily basis or a monthly basis.

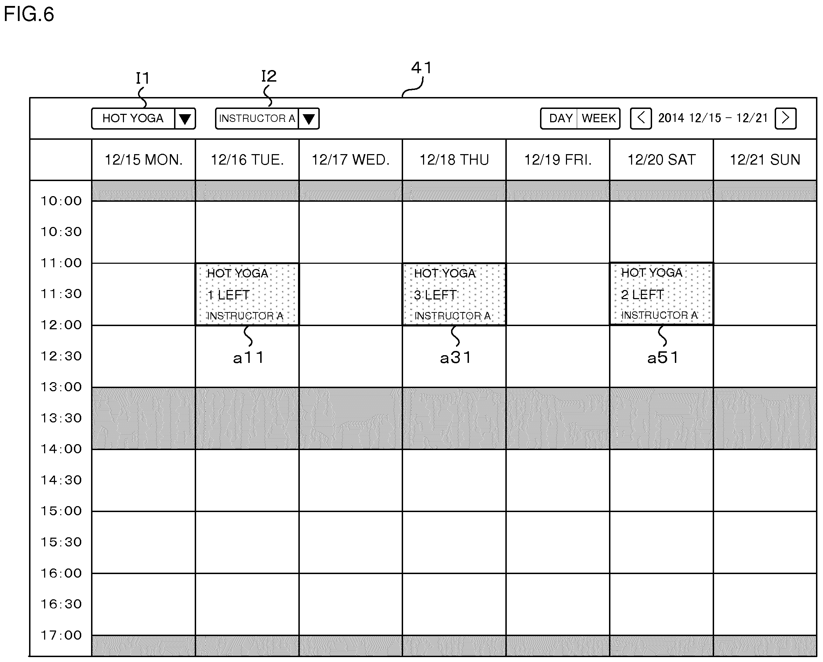

Figure 6 illustrates a schedule table as a reservation acceptance screen displayed on the reservation applicant terminal 4 when the reservation acceptance type is a preset type. Figure 6 is an example of a schedule table 41 displayed when the industry or the type of business of the reservation acceptor is a fitness studio.

In the schedule table 41, a menu item and a resource selected by a reservation applicant can be displayed. In Figure 6, "hot yoga" is selected in a menu item selection field I1, and "Instructor A" is selected in a resource selection field I2. Accordingly, in the schedule table 41, reservation slots a11, a31, and a51 corresponding to "hot yoga" and "Instructor A" are displayed.

In each of the reservation slots a11, a31, and a51, the upper row shows a menu item, the intermediate row shows the number of persons who made reservations relative to the capacity at the present point, and the lower row shows the name of an instructor that is a resource.

For example, the reservation slot a11 shows that a "hot yoga" program is scheduled from 11:00 to 12:00 on Tuesday, December 16, the instructor is "Instructor A", and the remaining number of the number of reservation acceptable persons is one.

It should be noted that in the schedule table 41, time slots other than 10:00 to 17:00 that is operating hours of the fitness studio and a time slot from 13:00 to 14:00 that is lunch time have darker background color than the other time slots, indicating that those time slots are excluded for reservation. While the schedule table 41 is displayed on a weekly basis, it may be displayed on a daily basis or a monthly basis.

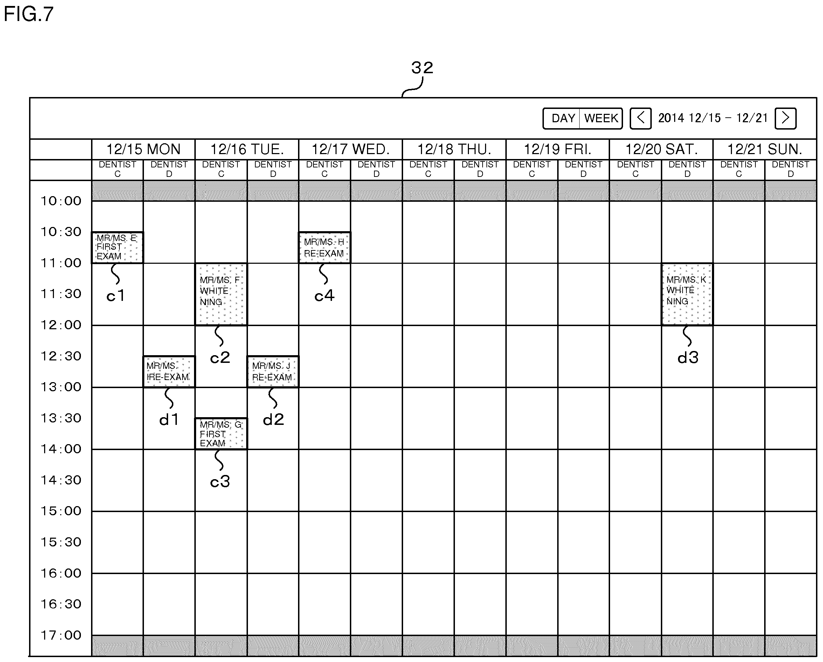

Figure 7 illustrates a schedule table as a reservation acceptance screen displayed on the reservation acceptor terminal 3 when the reservation acceptance type is a free acceptance type. Figure 7 is an example of a schedule table 32 displayed when the industry or the type of business of the reservation acceptor is a dental clinic.

The schedule table 32 shows respective schedules of the dentists registered as resources by the reservation acceptor. Figure 7 shows respective schedules of "Dentist C" and "Dentist D" from Monday, December 15 to Sunday, December 21, and a plurality of reservation slots c1 to c4 and d1 to d3 set by reservation applicants.

From 10:00 to 17:00 that is consultation hours of the dental clinic, time slots in which the reservation slots c1 to c4 and d1 to d3 are not set are available for reservation. It should be noted that in the schedule table 32, time slots other than 10:00 to 17:00 that is consultation hours of the dental clinic have darker background color than the others, indicating that those time slots are excluded for reservation.

In each of the reservation slots c1 to c4 and d1 to d3, the upper row shows the name of a reservation applicant, and the lower row shows a menu item.

For example, the reservation slot c1 shows that, as a schedule of "Dentist C", "first examination" of a reservation applicant "Mr/Ms. E" is set in the time slot from 10:30 to 11:00 on Monday, December 15.

Further, the reservation slot d1 shows that, as a schedule of "Dentist D", "re-examination" of a reservation applicant "Mr/Ms. I" is set in the time slot from 12:30 to 13:00 on Monday, December 15.

Further, the reservation slot c2 shows that, as a schedule of "Dentist C", "whitening" of a reservation applicant "Mr/Ms. F" is set in the time slot from 11:00 to 12:00 on Tuesday, December 16.

It should be noted that while the schedule table 32 is displayed on a weekly basis, it may be displayed on a daily basis or a monthly basis.

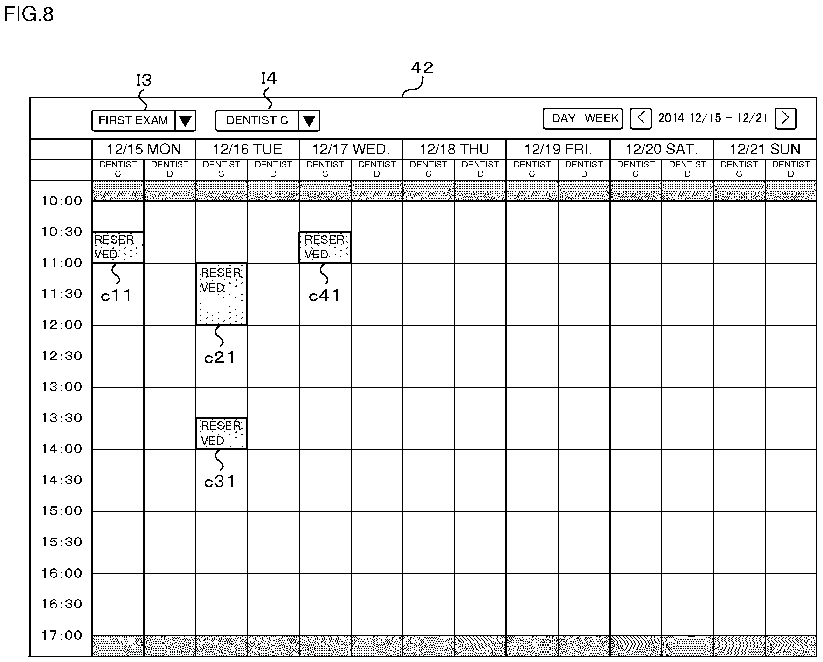

Figure 8 illustrates a schedule table as a reservation acceptance screen displayed on the reservation applicant terminal 4 when the reservation acceptance type is a free acceptance type. Figure 8 is an example of a schedule table 42 displayed when the industry or the type of business of the reservation acceptor is a dental clinic.

In the schedule table 42, reservation slots corresponding to the menu item and the resource selected by a reservation applicant can be displayed. In Figure 8, "first examination" is selected in the menu item selection field 13, and "Dentist C" is selected in the resource selection field 14. In this case, "Dentist C" is also in charge of "re-examination", "whitening", and the like besides "first examination". Accordingly, in order to prevent overlapping reservation of "Dentist C", reservation slots other than "first examination" are also displayed. Accordingly, in the schedule table 42, reservation slots c11, c21, c31, and c41 corresponding to "Dentist C" are displayed.

During 10:00 to 17:00 that is consultation hours of the dental clinic, time slots in which the reservation slots c11, c21, c31, and c41 are not shown are available for reservation. It should be noted that in the schedule table 42, time slots other than 10:00 to 17:00 that is consultation hours of the dental clinic have darker background color than the others, indicating that those time slots are excluded for reservation.

It should be noted that while the schedule table 42 is displayed on a weekly basis, it may be displayed on a daily basis.

As described above, according to the reservation management system 1 of the embodiment, a reservation acceptor is allowed to register a menu item that specifies a content of a service provided by the reservation acceptor, a resource used when providing the service by the reservation acceptor, and a resource group to which the resource is able to belong; and is allowed to set, for each resource, one or more resource groups to which the resource belongs. Then, with use of the menu item, the resource, and the resource groups, it is possible to accept a reservation from a reservation applicant. Further, with use of a correspondence relationship between the resource and the resource group set by the reservation acceptor, it is possible to accept a reservation in such a manner as to prevent a resource belonging to a plurality of resource groups from being reserved in an overlapping manner in the same time slop.

Thereby, when a resource belonging to a plurality of resource groups is an object of a reservation, it is possible to easily check the reservation statuses in all of the resource groups associated with the resource and to perform control to prevent overlapping reservations in the same time slot. Consequently, in a reservation processing for a resource belonging to a plurality of resource groups as an object, it is possible to secure a certain processing speed while securing the accuracy.

Therefore, according to the reservation management system 1 of the embodiment, it is possible to provide the reservation management system 1 in which overlapping reservations of a resource can be prevented easily and reliably.

### [Modification]

It should be noted that the present invention is not limited to the embodiment described above. The present invention can be carried out in other various forms within a range not deviating from the scope of the present invention. As such, the embodiment described above merely illustrates examples in every aspect, and is not construed as limited. For example, the respective processing steps can be carried out by arbitrarily changing the order within the scope of not causing contradiction in the processing contents, or can be carried out in parallel.

Further, while the reservation acceptor terminal 3 or the reservation applicant terminal 4 accesses the web page of the reservation management server 2 and performs processing in the embodiment described above, it is not necessary to access a web page. For example, in the case where the reservation acceptor terminal 3 or the reservation applicant terminal 4 installs a reservation management application (hereinafter referred to as a reservation management app) and realizes various functions of the reservation management system, it is also possible to activate the reservation management app in the reservation acceptor terminal 3 or the reservation applicant terminal 4 to perform reservation management processing and the like, and transmit the data processed in the reservation acceptor terminal 3 or the reservation applicant terminal 4 to the reservation management server 2.

Further, while description has been given on the case where a reservation applicant makes a reservation by operating the reservation applicant terminal 4 in the embodiment described above, the present invention is not limited to this. The present invention is also applicable to the cases where a reservation applicant makes a reservation by the phone or a reservation applicant visits to make a reservation, for example. In such cases, the reservation acceptor who receives the reservation content from the reservation applicant may register the reservation contents from the reservation acceptance screen for the reservation acceptor illustrated in Figure 5 or 7 by operating the reservation acceptor terminal 3.

Further, while description has been given on the case where a preset type and a free acceptance type are set as reservation acceptance types in the embodiment described above, the present invention is not limited to the case of setting only these two reservation acceptance types. As reservation acceptance types, in addition to the preset type and the free acceptance type, another acceptance type may also be set, for example. Alternatively, it is also possible to set either one of the preset type and the free acceptance type.

As another acceptance type, an offer-based acceptance type may be set, for example. An offer-based acceptance type is an acceptance type in which a reservation applicant uses an offer-based reservation slot that is set by operating the reservation applicant terminal 4 to accept a reservation from another reservation applicant. An offer-based reservation slot may be set as described below, for example.

First, the reservation management module 221 displays an offer-based reservation slot setting screen on the reservation applicant terminal 4. Next, the reservation management module 221 accepts, from a reservation applicant, designation of a range of setting an offer-based reservation slot within a range in which a reservation slot can be set and no reservation slot has been set. The range in which a reservation slot can be set is previously set by the reservation acceptor. Setting of an offer-based reservation slot can be made by using a schedule table defined based on the time and a resource, for example.

Then, the reservation management module 221 accepts, from the reservation applicant, designation of a menu item corresponding to the offer-based reservation slot and the number (capacity) of persons who can reserve the offer-based reservation slot. By accepting designation of the menu item, a resource and a resource group belonging to the menu can be specified. When a plurality of resources or resource groups are specified, it is possible to present a plurality of resources or resource groups to the reservation applicant and urge the reservation applicant to designate a resource or a resource group. It should be noted that when designating the menu item, it is possible to further accept designation of a resource or a resource group belonging to the menu item, from the reservation applicant.

Further, it is also possible to further accept information (for example, email address) specifying a reservation applicant who can reserve the offer-based reservation slot. Thereby, it is possible to send an email, to the accepted email address, describing that an offer-based reservation slot is set, and authorize processing on the offer-based reservation slot by limiting to the reservation applicant who received the email. Processing on the offer-based reservation slot includes processing to reserve the offer-based reservation slot, and processing to refer to the reservation contents including personal information and the like of the reservation applicant who reserved the offer-based reservation slot, for example.

Then, the reservation management module 221 sets an offer-based reservation slot based on the various contents accepted from the reservation applicant.

It should be noted that the reservation acceptor is able to limit reservation applicants who can set an offer-based reservation slot. For example, authorization to set an offer-based reservation slot may be given to a particular reservation applicant. In that case, the reservation acceptor may create a list for managing reservation applicants to whom authorization is given, and reservation applicants may be controlled based on the list.

Regarding the offer-based reservation slot, reservation is established when the execution condition of the reservation object is satisfied. The execution condition of the reservation object may be that a minimum number of persons apply for the reservation by the due date, for example. The execution condition of the reservation object is set by the reservation acceptor. The execution condition set by the reservation acceptor may be changed by the reservation applicant.

As described above, by further setting an offer-based acceptance type as an acceptance type, it is possible to set a reservation slot desired by a reservation applicant within a range not overlapping the time slot of another reservation slot of the same resource and the same time slot. Thereby, it is possible to set a resource not set in a reservation slot by the reservation acceptor, under the leadership of the reservation applicant. Thereby, it is possible to utilize the resource more effectively.

The program of the embodiment can be installed or loaded to a computer through various types of recording media (computer-readable recording media) including an optical disk such as a CD-ROM, a magnetic disk, and a semiconductor memory, or by being downloaded through a communication network or the like.

### Industrial Applicability

A reservation management apparatus, a reservation management method, and a reservation management program according to the present invention are suitable for preventing overlapping reservations of a resource easily and reliably.

### Reference Signs List

- 1: reservation management system
- 2: reservation management server
- 3: reservation acceptor terminal
- 4: reservation applicant terminal
- 20: processor
- 21: communication interface
- 22: storage resource
- 220: computer program
- 221: reservation management module
- 222: tool information
- 223: schedule information
- 224: reservation information
- N: network

## Claims

1. A reservation management apparatus connectable with a reservation acceptor terminal and a reservation applicant terminal over a network, the reservation acceptor terminal being used by a reservation acceptor who accepts a reservation, the reservation applicant terminal being used by a reservation applicant who applies for a reservation, the apparatus comprising:
means for allowing the reservation acceptor to register a menu item that specifies a content of a service provided by the reservation acceptor, a resource used when providing the service, and a resource group to which the resource is able to belong;
means for allowing the reservation acceptor to set, for each of the resource, one or more of the resource groups to which the resource belongs; and
means for accepting a reservation from the reservation applicant with use of the menu item, the resource, and the resource group, wherein
the means for accepting the reservation accepts a reservation in such a manner as to prevent the resource belonging to the resource groups from being reserved in an overlapping manner in the same time slot, with use of a correspondence relationship between the resource and the resource group set via the reservation acceptor terminal by the reservation acceptor.

2. The reservation management apparatus according to claim 1, wherein
the means for allowing selection further allows the reservation acceptor to select an industry or a type of business of the reservation acceptor, and
the means for allowing the reservation acceptor to register presents, to the reservation acceptor, contents respectively registerable as the menu item, the resource, and the resource group, the contents being previously set in association with the industry or the type of business selected by the reservation acceptor via the reservation acceptor terminal.

3. The reservation management apparatus according to claim 1, wherein
the means for allowing the reservation acceptor to register further allows registration of price of each of the resource.

4. The reservation management apparatus according to claim 1, wherein
the means for allowing the reservation acceptor to register further allows registration of the resource group selectable by the reservation applicant at least in the menu item, when allowing registration of the menu item.

5. The reservation management apparatus according to claim 1, further comprising
means for allowing the reservation acceptor to select, from reservation acceptance types including at least a preset type and/or a free acceptance type, one of the reservation acceptance types, the preset type being a type of accepting a reservation from the reservation applicant with use of a reservation slot previously set by the reservation acceptor, the free acceptance type being a type of accepting a reservation from the reservation applicant by allowing setting of a reservation slot within service providing hours previously set by the reservation acceptor, wherein
the means for accepting the reservation accepts a reservation from the reservation applicant with further use of a reservation acceptance screen corresponding to the reservation acceptance type selected by the reservation acceptor via the reservation acceptor terminal.

6. The reservation management apparatus according to claim 1, wherein
the means for accepting the reservation specifies the resource group to which the resource selected in a reservation by the reservation applicant belongs and that is other than the resource group selected in the reservation, with use of the correspondence relationship between the resource and the resource group set by the reservation acceptor via the reservation acceptor terminal, determines whether or not the resource is registered as the resource belonging to the specified resource group in a time slot including a reservation time set in the reservation, and does not accept the registration when the resource is registered while accepts the registration when the resource is not registered.

7. The reservation management apparatus according to claim 5, wherein
the reservation acceptance types further include an offer-based acceptance type, the offer-based acceptance type being a type of accepting a reservation from the reservation applicant with use of an offer-based reservation slot set by the reservation applicant authorized by the reservation acceptor, and
the reservation slot for the offer-based acceptance type is set by accepting, from the reservation applicant, designation of a range of setting the offer-based reservation slot within a range in which a reservation slot is settable and no reservation slot is set, and accepting, from the reservation applicant, the menu item corresponding to the offer-based reservation slot and the number of persons allowed to reserve in the offer-based reservation slot.

8. The reservation management apparatus according to claim 7, wherein
regarding the reservation slot of the offer-based acceptance type, a reservation is established when an execution condition of a predetermined reservation object is satisfied.

9. A reservation management method executed by a computer device connectable with a reservation acceptor terminal and a reservation applicant terminal over a network, the reservation acceptor terminal being used by a reservation acceptor who accepts a reservation, the reservation applicant terminal being used by a reservation applicant who applies for a reservation, the method comprising:
a step of allowing the reservation acceptor to register a menu item that specifies a content of a service provided by the reservation acceptor, a resource used when providing the service, and a resource group to which the resource is able to belong;
a step of allowing the reservation acceptor to set, for each of the resource, one or more of the resource groups to which the resource belongs; and
a step of accepting a reservation from the reservation applicant with use of the menu item, the resource, and the resource group, wherein
the step of accepting the reservation includes accepting a reservation in such a manner as to prevent the resource belonging to the resource groups from being reserved in an overlapping manner in the same time slot, with use of a correspondence relationship between the resource and the resource group set via the reservation acceptor terminal by the reservation acceptor.

10. A reservation management program that causes a computer device to function as, the computer device being connectable with a reservation acceptor terminal and a reservation applicant terminal over a network, the reservation acceptor terminal being used by a reservation acceptor who accepts a reservation, the reservation applicant terminal being used by a reservation applicant who applies for a reservation:
means for allowing the reservation acceptor to register a menu item that specifies a content of a service provided by the reservation acceptor, a resource used when providing the service, and a resource group to which the resource is able to belong;
means for allowing the reservation acceptor to set, for each of the resource, one or more of the resource groups to which the resource belongs; and
means for accepting a reservation from the reservation applicant with use of the menu item, the resource, and the resource group, wherein
the means for accepting the reservation accepts a reservation in such a manner as to prevent the resource belonging to the resource groups from being reserved in an overlapping manner in the same time slot, with use of a correspondence relationship between the resource and the resource group set via the reservation acceptor terminal by the reservation acceptor.
